# EUROPÄISCHE PATENTSCHRIFT

(11) **EP 0 975 829 B1**
(45) Veröffentlichungstag und Bekanntmachung des Hinweises auf die Patenterteilung: **15.05.2002**
(21) Anmeldenummer: 98909295.2
(22) Anmeldetag: 29.01.1998
(51) Int. Cl.: D03C 7/00, D03D 51/02, H02P 7/34

(54) **ANTRIEBSEINHEIT FÜR EINE WELLE EINER SYNCHRON ZU DEN SCHÄFTEN EINER WEBMASCHINE ARBEITENDEN VORRICHTUNG ZUM BILDEN EINER DREHERKANTE**
DRIVE UNIT FOR A SHAFT OF A DEVICE WORKING IN SYNCHRONY WITH THE SHANKS OF A MECHANICAL LOOM TO FORM A LENO SELVAGE
UNITE D'ENTRAINEMENT POUR UN ARBRE D'UN DISPOSITIF TRAVAILLANT SYNCHRONIQUEMENT AVEC LES LAMES D'UN METIER MECANIQUE ET SERVANT A FORMER UNE LISIERE A PAS DE GAZE

(30) Priorität: 18.04.1997 DE 19716349
(43) Veröffentlichungstag der Anmeldung: 02.02.2000
(73) Patentinhaber: Klöcker, Thomas, 46325 Borken (DE)
(72) Erfinder: NOWACK, Klaus, D-46399 Bocholt (DE); SCHWEMMLEIN, Christoph, D-46325 Borken (DE); WANNING, Werner, D-46354 Südlohn (DE)
(74) Vertreter: Schulze Horn & Partner GbR
(86) Internationale Anmeldenummer: DE9800257
(87) Internationale Veröffentlichungsnummer: WO9848090

(56) Entgegenhaltungen:
- EP-A- 0 750 061
- WO-A-94/29502
- DE-C- 4 405 777
- DE-C- 19 520 500
- DE-C- 19 548 955
- US-A- 3 010 051
- PATENT ABSTRACTS OF JAPAN vol. 015, no. 227 (C-0839), 10.Juni 1991 & JP 03 069627 A (TOYOTA AUTOM LOOM WORKS LTD), 26.März 1991,

## Beschreibung

Die Erfindung betrifft eine Antriebseinheit für eine Welle einer synchron zu den Schäften einer Webmaschine arbeitenden Vorrichtung zum Bilden einer Dreherkante.

Aus der DE 195 48 955 C1 ist eine Vorrichtung zum Bilden einer Dreherkante bekannt, bei der ein Elektromotor vorgesehen ist, dessen Läufer zwei nach Art eines Propellers ausgerichtete Arme aufweist. Diese Arme besitzen endseitig jeweils eine Öse zum Durchführen jeweils eines Dreherfadens. Durch Drehung des Läufers und mithin durch Drehung der Arme entsteht in Verbindung mit dem Schußfaden die Dreherkante. Um eine dauerhafte Verbindung der Dreherfäden im Bereich der Spulen zu vermeiden, ist die Drehrichtung des Laufes des Motors umkehrbar.

Durch eine Welle angetriebene Vorrichtungen zum Bilden einer Dreherkante sind beispielsweise aus der DE-PS 195 20 500.6 bekannt. Eine derartige Vorrichtung steht bislang mechanisch gekoppelt mit dem Antrieb einer Webmaschine in Verbindung, wobei üblicherweise an die Abtriebswelle einer Webmaschine, das heißt einer Welle, die mit dem Antrieb der Webmaschine gekoppelt ist und dem Antrieb von Nebenaggregaten dient, eine weitere Welle, beispielsweise in Form einer biegsame Welle, angeflanscht wird, wobei durch diese biegsame Welle die Welle der Vorrichtung zum Bilden einer Dreherkante angetrieben wird. Ein unmittelbarer Antrieb der Vorrichtung zum Bilden einer Dreherkante durch eine entsprechende Abtriebswelle der Webmaschine ist deswegen erforderlich, da die Dreherkantenvorrichtung synchron zu den Webschäften der Webmaschine laufen muß. Das heißt, daß die Stellung der einzelnen Fadenführungselemente der Dreherkantenvorrichtung abhängig ist von der Stellung der Webschäfte und damit von dem Öffnungswinkel des Faches.

Es hat sich nun gezeigt, daß bei modernen Webmaschinen häufig keine Abtriebswelle mehr für Nebenaggregate, wie z. B. eine Dreherkantenvorrichtung vorhanden ist, die als Antrieb für eine derartige Vorrichtung benutzt werden könnte. Häufig ist es auch so, daß, selbst wenn eine derartige Abtriebswelle an einer Webmaschine vorhanden ist, diese so ungünstig liegt, daß der Aufwand für eine mechanische Kopplung zwischen der Abtriebswelle und der Welle der Dreherkantenvorrichtung zu aufwendig ist.

Der Erfindung liegt daher die Aufgabe zugrunde, eine Antriebseinheit der eingangs genannten Art zu schaffen, mit Hilfe derer, ohne eine unmittelbare mechanische Kopplung, wie beispielsweise mittels einer flexiblen Welle, ein synchroner Lauf zu der Bewegung der Webschäfte einer Webmaschine herstellbar ist.

Die Aufgabe wird erfindungsgemäß dadurch gelöst, daß die Welle durch einen ersten Elektromotor antreibbar ist (Antriebsmotor), der mit einem durch die Abtriebswelle der Webmaschine angetriebenen Elektromotor nach Art einer elektrischen Arbeitswelle gekoppelt ist. Durch eine derartige elektrische Welle wird ein synchroner Lauf des Antriebsmotors für die Dreherkantenvorrichtung mit der Abtriebswelle der Webmaschine erzeugt.

Im einzelnen ist vorgesehen, daß der Elektromotor zum Antrieb der Welle der Dreherkantenvorrichtung mit dem nach Art eines Generators arbeitenden zweiten Elektromotor, der durch die Welle der Webmaschine antreibbar ist, derart gekoppelt ist, daß die Phasenlage des zweiten Elektromotors als Signal elektrisch abgegriffen und mit diesem Signal der Elektromotor zum Antrieb der Welle der Dreherkantenvorrichtung antreibbar ist. Hierbei sind der erste und zweite Elektromotor als Asynchronmotoren ausgebildet. Im einzelnen ist vorgesehen, daß die Statorwicklungen des ersten und zweiten Motors parallel geschaltet sind, wobei vorteilhaft die Stromzufuhr für den ersten und zweiten Motor durch die Statorwicklung erfolgt, da die Statorwicklung, da sie außen liegt, besser in der Lage ist, überschüssige Wärme abzugeben.

Weiterhin ist vorgesehen, daß die Rotorwicklungen des zweiten Motors zweiphasig und die des Motors für die Dreherkantenvorrichtung einphasig ans Netz schaltbar sind, wobei die Rotorwicklungen des zweiten Motors (Generator) und des ersten Motors (Antriebsmotor) untereinander zweiphasig verbindbar sind.

Die Zeichnung zeigt zur beispielhaften Erläuterung der Erfindung schematisch die Schaltung der elektrischen Arbeitswelle mit dem Motor zum Antrieb der Dreherkantenvorrichtung und dem nach Art eines Generators arbeitenden auf der Abtriebswelle der Webmaschine sitzenden zweiten Motors, der mit dem Antriebsmotor der Dreherkantenvorrichtung elektrisch gekoppelt ist.

Die Zeichnung zeigt die Schaltung für die elektrische Drei-Phasen-Arbeitswelle. Hierbei ist mit 100 das Netz mit den drei Phasen bezeichnet; der erste Motor, das heißt, der Antriebsmotor für die Dreherkantenvorrichtung besitzt das Bezugszeichen 110. Der Motor 110 treibt die Welle 111 für die Dreherkantenvorrichtung 1 an. Der nach Art eines Generators arbeitende zweite Motor 120 steht mit der Abtriebswelle 121 der Webmaschine in Antriebsverbindung. Von dem Motor 120 wird die Phasenlage als elektrisches Signal dem Motor 110 übermittelt, der die Dreherkantenvorrichtung 1 durch die Welle 111 antreibt. Die Welle 111 ist hierbei mit dem Antrieb 13, 17 der Dreherkantenvorrichtung 1 gekoppelt.

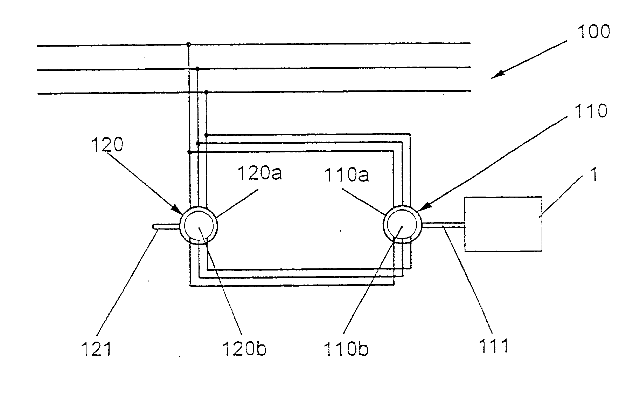

Wie aus Figur 1 weiter erkennbar, sind Rotor 110b, 120b und Stator 110a, 120a jeweils dreiphasig ausgebildet. Die Stromzuführung zum Rotor erfolgt über Schleifringe mittels Kohlebürsten. Die Statorwicklungen in dem zweiten Motor, der nach Art eines Generators arbeitet, und dem ersten Motor sind jeweils parallel geschaltet. Die Rotorwicklungen dieses zweiten Motors werden zweiphasig, die des Antriebsmotors (zweiter Motor) nur einphasig ans Netz geschaltet, während die beiden Motoren zweiphasig untereinander verbunden sind.

## Patentansprüche

1. Webmaschine mit einer Antriebseinheit für eine Welle einer synchron zu den Schäften der Webmaschine arbeitenden Vorrichtung zum Bilden einer Dreherkante,
**dadurch gekennzeichnet,**
**daß** die Welle (111) durch einen ersten Elektromotor (110) angetrieben ist, der mit einem durch eine Abtriebswelle (121) der Webmaschine angetriebenen zweiten Elektromotor (120) nach Art einer elektrischen Arbeitswelle gekoppelt ist.

2. Webmaschine nach Anspruch 1,
**dadurch gekennzeichnet,**
**daß** der Elektromotor (110) zum Antrieb der Welle (111) der Dreherkantenvorrichtung (1) mit dem nach Art eines Generators arbeitenden zweiten Elektromotor (120), der durch die Welle (121) der Webmaschine antreibbar ist, derart gekoppelt ist, daß die Phasenlage des zweiten Elektromotors (120) als Signal elektrisch abgegriffen und mit diesem Signal der Elektromotor (110) zum Antrieb der Welle (111) der Dreherkantenvorrichtung (1) ansteuerbar ist.

3. Webmaschine nach Anspruch 1,
**dadurch gekennzeichnet,**
**daß** der erste und zweite Elektromotor als Asynchronmotoren ausgebildet sind.

4. Webmaschine nach einem der voranstehenden Ansprüche,
**dadurch gekennzeichnet,**
**daß** die Statorwicklungen des ersten und zweiten Elektromotors (110, 120) parallel geschaltet sind.

5. Webmaschine nach einem der voranstehenden Ansprüche,
**dadurch gekennzeichnet,**
**daß** die Stromzufuhr für den ersten und zweiten Elektromotor (110, 120) durch die Statorwicklung (110a, 120a) erfolgt.

6. Webmaschine nach einem der voranstehenden Ansprüche,
**dadurch gekennzeichnet,**
**daß** die Rotorwicklung des zweiten Motors (120) zweiphasig und die des ersten Motors (110) für die Dreherkantenvorrichtung einphasig ans Netz (100) schaltbar sind, wobei die Rotorwicklungen des zweiten Motors und die des ersten Motors untereinander zweiphasig verbindbar sind.

## Claims

1. Loom with a drive unit for a spindle of a device working synchronously with the shafts of the loom to create a turned edge,
**characterised in that,**
the spindle (111) is driven by a first electric motor (110), which is connected to a second electric motor (120) driven by an output shaft (121) of the loom in the style of an electrical working shaft.

2. Loom as per Claim 1,
**characterised in that,**
the electric motor (110) for driving the spindle (111) of the edge turning device (1) is connected to the second electric motor (120), which works as a generator and which can be driven by the spindle (121) of the loom, in such a way that the phase relation of the second electric motor (120) is measured electrically as a signal which can be used to control the electric motor (110) to drive the spindle (111) of the edge turning device (1).

3. Loom as per Claim 1,
**characterised in that,**
the first and second electric motors are set up as asynchronous motors.

4. Loom as per one of the above claims,
**characterised in that,**
the stator coils of the first and second electric motors (110, 120) are connected in parallel.

5. Loom as per one of the above claims,
**characterised in that,**
the current for the first and second electric motors (110, 120) is supplied by the stator coil (110a, 120a).

6. Loom as per one of the above claims,
**characterised in that,**
the rotor coil of the second motor (120) can be connected to the mains (100) in dual-phase and that of the first motor (110) for the edge turning device in single-phase, whereby the rotor coils of the second motor and of the first motor can be connected to each other in dual-phase.

## Revendications

1. Métier mécanique pourvu d'une unité d'entraînement pour un arbre d'un dispositif travaillant en synchronisme avec les lames du métier mécanique pour former un liseré à pas de gaze,
**caractérisé en ce que**
l'arbre (111) est entraîné par un premier moteur électrique (110) qui est couplé à un second moteur électrique (120) entraîné par un arbre d'entraînement (121) du métier mécanique opérant en arbre moteur électrique.

2. Métier mécanique selon la revendication 1,
**caractérisé en ce que**
le moteur électrique (110) pour l'entraînement de l'arbre (111) du dispositif de formation de liséré à pas de gaze est couplé au second moteur électrique (120) opérant en générateur, qui peut être entraîné par l'arbre (121) du métier mécanique, de sorte que la position de phase du second moteur électrique (120) soit prélevée électriquement comme signal et que ce signal permette de commander le moteur électrique (110) pour entraîner l'arbre (111) du dispositif (1) de formation de liseré à pas de gaze.

3. Métier mécanique selon la revendication 1,
**caractérisé en ce que**
le premier et le second moteurs électriques se présentent sous la forme de moteurs asynchrones.

4. Métier mécanique selon l'une quelconque des revendications précédentes,
**caractérisé en ce que**
les enroulements des stators des premier et second moteurs électriques (110, 120) sont commutés en parallèle.

5. Métier mécanique selon l'une quelconque des revendications précédentes,
**caractérisé en ce que**
l'amenée de courant pour les premier et second moteurs électriques (110, 120) se fait via l'enroulement des stators (110a, 120a).

6. Métier mécanique selon l'une quelconque des revendications précédentes,
**caractérisé en ce que**
l'enroulement du rotor du second moteur (120) peut être commuté en biphasé et celui du rotor du premier moteur (110) pour le dispositif de formation de liseré à pas de gaze en monophasé sur le réseau (100), l'enroulement du rotor du second moteur et l'enroulement du rotor du premier moteur pouvant être connectés l'un à l'autre en biphasé.
